# EUROPEAN PATENT SPECIFICATION

(11) **EP 4 306 012 B1**
(45) Date of publication and mention of the grant of the patent: **17.09.2025**
(21) Application number: 22767375.3
(22) Date of filing: 25.02.2022
(51) Int. Cl.: A47J 31/34, A47J 31/52, A47J 31/08, A47J 31/36, A47J 31/46

(54) **ESPRESSO EXTRACTION DEVICE AND METHOD**
VORRICHTUNG UND VERFAHREN ZUR EXTRAKTION VON ESPRESSO
DISPOSITIF ET PROCÉDÉ D'EXTRACTION D'EXPRESSO

(30) Priority: 08.03.2021 KR 20210029941
(43) Date of publication of application: 17.01.2024
(73) Proprietor: Zeroth Law, Inc., Seoul 08613 (KR)
(72) Inventor: YOO, Jun Seon, Seoul 08786 (KR); PARK, Jin Woo, Seoul 06274 (KR); AN, Hyeong Jeon, Gyeonggi-do 14345 (KR); NOH, Hyun Woo, Gyeonggi-do 18478 (KR)
(74) Representative: Rondano, Davide
(86) International application number: PCT/KR2022/002758
(87) International publication number: WO 2022/191479

(56) References cited:
- WO-A1-2013/121438
- KR-A- 20090 039 858
- KR-A- 20110 045 028
- KR-A- 20110 045 028
- KR-B1- 100 224 298
- KR-B1- 101 448 230
- KR-B1- 101 448 230
- KR-B1- 101 897 569
- US-A1- 2019 223 656

## Description

### Technical field

The present disclosure relates to an espresso extraction device and an espresso extraction method. Specifically, the present disclosure relates to an espresso extraction device and an espresso extraction method, which are capable of extracting espresso with a constant flavor by maintaining a constant extraction pressure during a process of extracting espresso.

### Background art

Espresso is extracted by tamping coffee bean powder contained in a portafilter, mounting the portafilter on an espresso extraction device, and applying pressure to the coffee bean powder. In this case, the pressure applied to the coffee bean powder needs to be constantly maintained during the process of extracting espresso in order to maintain a constant flavor of the espresso. That is, the process of maintaining a constant espresso extraction pressure is an important factor in maintaining an espresso flavor.

General espresso extraction devices are configured to adjust the espresso extraction pressure by adjusting a pressure unit configured to generate pressure and measuring the pressure generated by the pressure unit. However, in this case, even though the pressure, which is generated by the pressure unit and measured, reaches a reference pressure, the extraction pressure, which is actually measured in an extraction unit, may be different from the pressure measured in the pressure unit.

For example, the pressure and extraction pressure, which are applied to the coffee bean powder, may vary depending on various factors such as the amount, grinding degree, or freshness of coffee bean powder, a tamping state, or the like. In addition, in case that the espresso extraction device shares a flow path, which is connected to the espresso extraction device, with an ice machine that uses water, the amount of water to be supplied to the espresso extraction device is affected, which may affect the espresso extraction pressure. For this reason, the extraction pressure of the espresso extraction device in the related art varies depending on various factors, which causes a problem in which a flavor of the extracted espresso is not constant.

Accordingly, there is a need to develop an espresso extraction device and an espresso extraction method, which are capable of uniformly maintaining a flavor of the extracted espresso by measuring pressure in the extraction unit instead of pressure in the pressure unit, more accurately adjusting espresso extraction pressure, and uniformly maintaining the extraction pressure during the extraction process.

KR 101 448 230 B1 discloses an espresso extraction method and an espresso extraction device according to the preambles of independent claim 1 and independent claim 7, respectively.

### Technical problem

An object of the present disclosure is to provide an espresso extraction device and an espresso extraction method, which are capable of constantly maintaining extraction pressure to be reference pressure by adjusting, in real time, extraction pressure of an extraction unit.

Another object of the present disclosure is to provide an espresso extraction device and an espresso extraction method, which are capable of minimizing an error between pressure generated by a pressure unit and pressure applied to coffee bean powder.

Still another object of the present disclosure is to provide an espresso extraction device and an espresso extraction method, which are capable of more constantly maintaining espresso extraction pressure by removing bubbles in the espresso extraction device.

Yet another object of the present disclosure is to provide an espresso extraction device and an espresso extraction method, which are capable of extracting espresso regardless of a temperature of water.

Technical problems of the present disclosure are not limited to the aforementioned technical problems, and other technical problems, which are not mentioned above, may be clearly understood by those skilled in the art from the following descriptions.

### Technical solution

To achieve the above-mentioned objects, several embodiments of the present disclosure provide an espresso extraction method, which is performed by a control unit configured to control an operation of a valve unit or a pressure unit configured to adjust pressure applied to an extraction unit of an espresso extraction device based on sensing data of a sensor unit provided in the extraction unit, the espresso extraction method including: mounting a portafilter on a head of the extraction unit; removing bubbles in the pressure unit by filling the pressure unit with a fluid and controlling the operation of the valve unit; removing bubbles in the extraction unit by filling the extraction unit with a fluid and controlling the operation of the valve unit; extracting espresso by applying pressure to a fluid which is contained in the extraction unit by operating the pressure unit; receiving extraction pressure in the extraction unit by means of the sensor unit; and controlling the operation of the pressure unit based on the extraction pressure.

In addition, the receiving of the extraction pressure and the controlling of the operation of the pressure unit may be performed in real time while the extracting of the espresso is conducted.

In addition, the controlling of the operation of the pressure unit may include: comparing the extraction pressure and a reference pressure; generating a control signal based on the compared pressures; and transmitting the control signal to the pressure unit.

In addition, the generating of the control signal may include: generating a control signal for controlling the pressure unit in order to to decrease pressure in the extraction unit when the extraction pressure is higher than the reference pressure; generating a control signal for controlling the pressure unit in order to to increase pressure in the extraction unit when the extraction pressure is lower than the reference pressure; and generating a control signal for controlling the pressure unit in order to to maintain pressure in the extraction unit when the extraction pressure is equal to the reference pressure.

In addition, the valve unit may include: a first valve configured to control a flow rate of a fluid to be supplied to the pressure unit and the extraction unit; a second valve configured to be controlled to be opened or closed so that a first flow path, which has one side connected to the pressure unit and the other side opened, is opened or closed based on whether a fluid is detected in the first flow path; and a third valve configured to be controlled to be opened or closed so that a second flow path, which has one side connected to the extraction unit and the other side opened, is opened or closed on the basis of whether a fluid is detected in the second flow path, a fluid may be supplied into the pressure unit when the first and second valves are opened, a fluid may be supplied into the extraction unit when the first and second valves are opened and the second valve is closed, and the first valve may be closed when the second and the third valves are closed.

In addition, the removing of bubbles in the pressure unit may include: closing the third valve and opening the first and the second valves; receiving information on whether the fluid is detected at the other side of the first flow path from the sensor unit; and controlling opening or closing of the second valve by determining whether a fluid is detected at the other side of the first flow path.

In addition, the removing of bubbles in the extraction unit may include: opening the third valve; receiving information on whether a fluid is detected at the other side of the second flow path from the sensor unit; and controlling opening or closing of the first and third valves by determining whether the fluid is detected at the other side of the second flow path.

Several embodiments of the present disclosure provide an espresso extraction device including: an extraction unit including a head on which a portafilter is mounted, the head configured to define a space together with the portafilter; a pressure unit configured to apply pressure to the extraction unit; a sensor unit configured to detect extraction pressure in the extraction unit; and a control unit configured to generate a control signal by comparing the extraction pressure and a reference pressure and control, in real time, an operation of the pressure unit in response to the control signal.

In addition, the control unit may control a speed of the pressure unit to decrease pressure in the extraction unit when the extraction pressure is higher than the reference pressure, the control unit may control the speed of the pressure unit in order to increase pressure in the extraction unit when the extraction pressure is lower than the reference pressure, and the control unit may control a speed of the pressure unit in order to maintain pressure in the extraction unit when the extraction pressure is equal to the reference pressure.

In addition, the espresso extraction device may further include: a valve unit configured to control an introduction of a fluid into and a discharge of a fluid from the pressure unit or the extraction unit, in which the valve unit includes: a first valve configured to control a flow rate of a fluid to be supplied to the pressure unit and the extraction unit; a second valve configured to open or close a first flow path having one side connected to the pressure unit and the other side opened; and a third valve configured to open or close a second flow path having one side connected to the extraction unit and the other side opened, in which the sensor unit senses whether a fluid is detected in the first flow path or the second flow path, and in which the control unit controls the valve unit to open or close the valve unit based on whether a fluid is detected in the first flow path or the second flow path.

In addition, the control unit may control an operation of the second valve in order to close the second valve when it is determined that a fluid is detected at the other side of the first flow path, the control unit may control an operation of the third valve to close the third valve when it is determined that a fluid is detected at the other side of the second flow path, and the control unit may control an operation of the first valve to close the first valve when the second and the third valves are closed.

In addition, the sensor unit may include: fluid detection sensors disposed at the other side of the first flow path and the other side of the second flow path and configured to detect a fluid at the other side of the first flow path and the other side of the second flow path; and a pressure sensor configured to measure extraction pressure of the extraction unit.

In addition, the head may include one or more surfaces inclined toward one side of the second flow path from an inner surface of the head.

Other detailed matters of the embodiment are included in the detailed description and the drawings.

### Advantageous effects

The espresso extraction device and the espresso extraction method according to the present disclosure may maintain the constant extraction pressure for extracting espresso by receiving, in real time, the extraction pressure of the extraction unit and adjusting, in real time, the pressure of the pressure unit.

In addition, according to the espresso extraction device and the espresso extraction method according to the present disclosure, an error between the pressure generated by the pressure unit and the pressure applied to the coffee bean powder may be minimized by supplying water to the coffee bean powder first before the process of extracting espresso, thereby minimizing the fluctuation of extraction pressure and the change in flavor of the extracted espresso caused by the pressure error.

In addition, the espresso extraction device and the espresso extraction method according to the present disclosure may reduce the occurrence of error of the extraction pressure caused by the bubbles by effectively removing the bubbles remaining in the device by removing the bubbles remaining in the espresso extraction device multiple times.

In addition, the espresso extraction device and the espresso extraction method according to the present disclosure may extract espresso regardless of a water temperature by adjusting the extraction pressure of the extraction unit.

The effects according to the present disclosure are not limited to the above-mentioned effects, and more various effects are included in the present disclosure.

### Description of drawings

FIG. 1 is a conceptual view of an espresso extraction device according to several embodiments of the present disclosure.
FIG. 2 is a cross-sectional view of the espresso extraction device according to several embodiments of the present disclosure.
FIG. 3 is a flowchart of an espresso extraction method according to several embodiments of the present disclosure.
FIGS. 4 and 5 are detailed flowcharts of the espresso extraction method according to several embodiments of the present disclosure.
FIGS. 6 to 11 are cross-sectional views for explaining the espresso extraction method according to several embodiments of the present disclosure.
FIG. 12 is a graph showing an experimental result of the espresso extraction method according to several embodiments of the present disclosure.
FIG. 13 is a graph showing experimental results of the espresso extraction method of the espresso extraction device according to several embodiments of the present disclosure and an espresso extraction method of an espresso extraction device according to a comparison group.

### Explanation of reference numerals and symbols

100: Espresso extraction device
110: Control unit
120: Pressure unit
130: Extraction unit
140: Sensor unit
150: Valve unit

### Detailed description

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art to which the present disclosure pertains can fully understand the scope of the present disclosure. The present disclosure will be defined only by the scope of the appended claims. Throughout the specification, the same reference numerals denote the same constituent elements. The terms used in the present specification are for explaining the exemplary embodiments, not for limiting the present disclosure. Therefore, the example of the present specification and the embodiment should not be construed to limit the scope of the present disclosure.

Unless otherwise specified, the terms "comprising," "including," or other variations thereof used in the present specification mean "including, but not limited to."

Unless explicitly stated otherwise, devices, which communicate with each other, need not consistently communicate with each other. In addition, the devices, which communicate with each other, may directly or indirectly communicate with each other through one or more intermediaries.

While process steps, method steps, algorithms, and the like may be sequentially described, such processes, methods, and algorithms may be configured to be performed alternately and sequentially. In other words, any order or sequence of steps, which may be described, does not necessarily represent a requirement that the steps need to be performed in that order. Any order or sequence of steps does not necessarily represent a requirement that the steps need to be performed sequentially. The steps of the processes, methods, and algorithms disclosed in the present specification may be performed in any order. In addition, some of the steps may be simultaneously performed.

When a single device or item is disclosed in the present specification, one or more devices or items may be used in place of the single device or item. Similarly, in case that a single device or item is disclosed in the present specification, one or more devices or items may be used in place of the single device or item. A function or feature of a device may be alternatively implemented by one or more other devices that are not specified as having the function or feature.

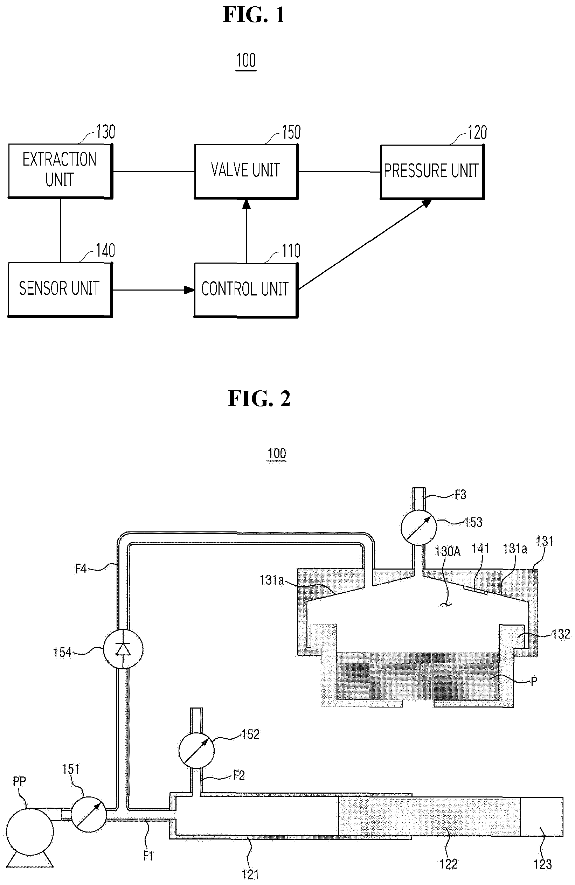

Hereinafter, an espresso extraction device and an espresso extraction method according to several embodiments of the present disclosure will be described with reference to FIGS. 1 to 13.

FIG. 1 is a conceptual view of an espresso extraction device according to several embodiments of the present disclosure. FIG. 2 is a cross-sectional view of the espresso extraction device according to several embodiments of the present disclosure. In the present specification, for convenience of description, an example will be described in which a fluid for generating pressure is water. However, the type of fluid is not limited thereto. Hereinafter, for convenience of description, the terms "water" and "fluid" will be used interchangeably.

With reference to FIGS. 1 and 2, an espresso extraction device 100 according to several embodiments of the present disclosure includes a control unit 110, a pressure unit 120, an extraction unit 130, a sensor unit 140, and valve units 150.

The control unit 110 controls an overall operation of the espresso extraction device 100. The control unit 110 may control a power operation or an extraction mode of the espresso extraction device 100. Alternatively, the control unit 110 may control an operation of the pressure unit 120 or the valve unit 150 by receiving sensing data from the sensor unit 140. In case that the control unit 110 turns on the power of the espresso extraction device 100, water may be supplied from a pump PP to the pressure unit 120 through a first flow path F1.

Specifically, the control unit 110 may control the pressure unit 120. In this case, in case that the control unit 110 receives extraction pressure related to the extraction unit 130 from the sensor unit 140, the control unit 110 may compare the extraction pressure and reference pressure, generate a control signal, and transmit the control signal to the pressure unit 120 to control the operation of the pressure unit 120. In this case, the control unit 110 may receive the extraction pressure in real time and control the operation of the pressure unit 120 in real time.

For example, in case that the extraction pressure is higher than the reference pressure, the control unit 110 may generate a control signal for increasing the pressure of the pressure unit 120, i.e., a control signal for increasing a speed of a piston 122 and transmit the control signal to the pressure unit 120. Therefore, the control unit 110 may control the operation of the pressure unit 120 to increase the pressure of the pressure unit 120 by increasing the speed of the piston 122.

In addition, in case that the extraction pressure is lower than the reference pressure, the control unit 110 may generate a control signal for decreasing the pressure of the pressure unit 120 and transmit the control signal to the pressure unit 120. That is, the control unit 110 may control the operation of the pressure unit 120 to decrease the speed of the piston 122 by generating the control signal for decreasing the speed of the piston 122 and transmitting the control signal to the pressure unit 120.

In addition, in case that the extraction pressure is equal to the reference pressure (or the extraction pressure is within a predetermined error range), the control unit 110 may generate the control signal for maintaining the pressure of the pressure unit 120 and transmit the control signal to the pressure unit 120. That is, the control unit 110 may control the operation of the pressure unit 120 to maintain the speed of the piston 122 by generating a control signal for maintaining the speed of the piston 122 and transmitting the control signal to the pressure unit 120.

Meanwhile, the control unit 110 may be implemented in a PID control manner. However, the present disclosure is not limited thereto.

In addition, the control unit 110 may control the valve unit 150 so that the valve unit 150 performs an open/closing operation, i.e., the valve unit 150 is opened or closed.

For example, in case that the control unit 110 receives information on whether the fluid is detected in the flow path connected to the pressure unit 120 or the extraction unit 130 from the sensor unit 140, the control unit 110 may control a valve disposed in the corresponding flow path so that the valve is opened or closed. That is, the control unit 110 may open or close a second valve 152 disposed in a second flow path F2 disposed in the pressure unit 120 on the basis of information on whether the fluid is detected in the second flow path F2 from the sensor unit 140. The control unit 110 may open or close the second valve 152 disposed in a third flow path F3 disposed in the extraction unit 130 on the basis of information on whether the fluid is detected in the third flow path F3 from the sensor unit 140. A detailed description thereof will be described below.

The pressure unit 120 may apply pressure to the fluid stored in the extraction unit 130 by controlling the speed of the piston 122. Specifically, the pressure unit 120 may control the speed of the piston 122 by receiving a control signal for controlling the pressure from the control unit 110. Therefore, the pressure of the fluid flowing through a fourth flow path F4 may be adjusted by the piston 122, such that the pressure in an extraction space 130A may be adjusted.

Specifically, the pressure unit 120 may include a cylinder 121, the piston 122, and a motor 123.

The cylinder 121 provides a space in which the piston 122 may move. Therefore, the pressure in the cylinder 121 may be adjusted as the piston 122 moves in the cylinder 121.

The first flow path F1 is connected to one end of the cylinder 121. In this case, the first flow path F1 may be a passageway through which the water is supplied into the cylinder 121.

The second flow path F2 is connected to one side of the cylinder 121. In this case, one side of the second flow path F2 may be connected to the cylinder 121, and the other side of the second flow path F2 may be opened, such that bubbles B or water in the cylinder 121 may be discharged. In addition, the second valve 152 and a fluid detection sensor are disposed at the other side of the second flow path F2. In case that the fluid in the second flow path F2 is detected by the fluid detection sensor, the second valve 152 may be closed to block the second flow path F2.

The piston 122 may rectilinearly reciprocate in the cylinder 121 by receiving power from the motor 123. Therefore, the motion of the piston 122 may adjust the pressure in the cylinder 121 and the pressure in the fourth flow path F4. For example, in case that the piston 122 moves in a direction in which a volume of the cylinder 121 decreases, the pressure in the cylinder 121 and the pressure in the fourth flow path F4 may increase. On the contrary, in case that the piston 122 moves to the outside of the cylinder 121, the pressure in the cylinder 121 and the pressure in the fourth flow path F4 may decrease.

The motor 123 may receive a control signal from the control unit 110 and provide power to the piston 122. For example, in case that the motor 123 receives a control signal for increasing the pressure of the pressure unit 120 or the extraction unit 130, the motor 123 may control the piston 122 to increase the speed of the piston 122, such that the pressure in the cylinder 121 may increase.

On the contrary, in case that the motor 123 receives a control signal for decreasing the pressure of the pressure unit 120 or the extraction unit 130, the motor 123 may control the piston 122 to decrease the speed of the piston 122, such that the pressure in the cylinder 121 may decrease.

In addition, in case that the motor 123 receives a control signal for maintaining the pressure of the pressure unit 120 or the extraction unit 130, the motor 123 may control the piston 122 to constantly maintain the speed of the piston 122, such that the pressure in the cylinder 121 may be constantly maintained. The motor 123 may be configured as a step motor. However, the present disclosure is not limited thereto.

Meanwhile, the configuration has been described in which the pressure of the pressure unit 120 is adjusted by the piston 122. However, the present disclosure is not limited thereto. The method of applying the pressure to the fluid by the pressure unit 120 may be variously modified and used.

The extraction unit 130 is configured to extract espresso in case that the espresso extraction device 100 is in the extraction mode.

Specifically, the extraction unit 130 includes a portafilter 132, and a head 131 on which the portafilter 132 is mounted. When the portafilter 132, in which coffee bean powder (hereinafter, referred to as a puck P) is stored, is mounted on the head 131, the extraction space 130A may be defined between the head 131 and the portafilter 132. Therefore, in case that the espresso extraction device 100 operates in the extraction mode, the extraction space 130A may be filled with water, and espresso may be extracted as the pressure in the extraction space 130A increases.

The third flow path F3 and the fourth flow path F4 are connected to one side of the head 131. One side of the third flow path F3 may be connected to the head 131, and the other side of the third flow path F3 may be opened, such that bubbles B or water produced in the extraction space 130A may be discharged. In addition, a third valve 153 and a fluid detection sensor (not illustrated) are disposed at the other side of the third flow path F3. In case that the fluid in the third flow path F3 is detected by the fluid detection sensor (not illustrated), the third valve 153 may be closed to block the third flow path F3.

One side of the fourth flow path F4 may be connected to the head 131, and the other side of the fourth flow path F4 may be connected to the first flow path F1. In this case, the fourth flow path F4 may be a passageway through which the water is supplied into the extraction unit 130.

The head 131 may include one or more surfaces 131a inclined toward the third flow path F3 from an inner surface thereof. For example, the inclined surfaces 131a of the head 131 are respectively disposed at left and right sides and provided inside the head 131. The inclined surface may be disposed to have a gradient toward the third flow path F3 from a sidewall of the head 131. Therefore, the bubbles B generated in the extraction space 130A may be guided toward the third flow path F3 along the inclined surface 131a of the head 131.

The sensor unit 140 may sense water or sense the extraction pressure of the extraction unit 130. The sensor unit 140 may create sensing data on the basis of the sensed water or extraction pressure and transmit the sensing data to the control unit 110. For example, the sensing data may include the extraction pressure or the information on whether the fluid is detected.

The sensor unit 140 includes the fluid detection sensors (not illustrated) and a pressure sensor 141.

For example, the fluid detection sensors (not illustrated) are disposed at the other side of the second flow path F2 and the other side of the third flow path F3. In case that the water is discharged to the second flow path F2 or the third flow path F3, the fluid detection sensor may create sensing data indicating that the water is detected.

However, the present disclosure is not limited thereto. In the embodiment of the present disclosure, the fluid detection sensor (not illustrated) may be excluded. In this case, in the present disclosure, various methods capable of detecting whether the water is discharged through the other side of the second flow path F2 or the third flow path F3 may be used in place of the fluid detection sensor (not illustrated).

In addition, the pressure sensor 141 may create sensing data by measuring the pressure in the extraction space 130A defined in the extraction unit 130. In this case, in consideration of various pressure drop elements included in the espresso extraction device 100, the pressure sensor 141 may be disposed at a position at which the pressure sensor 141 is least affected by an internal pressure drop in the extraction unit 130. Therefore, a pressure measurement accuracy of the pressure sensor 141 may increase with respect to the extraction unit 130.

The valve units 150 may be respectively disposed in the flow paths and control the introduction of water into or a discharge of water from the pressure unit 120 or the extraction unit 130. For example, in case that the valve unit 150 is opened, the water may be supplied into the pressure unit 120 or the extraction unit 130. Alternatively, the flow path is opened, such that the water may be discharged to the outside of the flow path. In contrast, in case that the valve unit 150 is closed, the supply of the fluid into the pressure unit 120 or the extraction unit 130 may be cut off. Alternatively, the flow path may be blocked, such that the discharge of the fluid to the outside of the flow path may be cut off.

The valve unit 150 may be opened or closed in response to an operational signal of the control unit 110. For example, in case that the valve unit 150 receives the operational signal from the control unit 110, the valve unit 150 may be closed to block the flow path or opened to open the flow path.

The valve unit 150 may include a first valve 151, the second valve 152, and the third valve 153.

The first valve 151 may be disposed in the first flow path F1 and control a flow rate of the water supplied from the pump PP to the pressure unit 120 or the extraction unit 130. For example, in case that the first valve 151 is opened, the water may be supplied to the pressure unit 120 and the extraction unit 130. In case that both the pressure unit 120 and the extraction unit 130 are filled with water, the first valve 151 may be closed, such that the supply of water from the pump PP to the pressure unit 120 and the extraction unit 130 may be cut off.

The second valve 152 may be disposed in the second flow path F2 and open or close the second flow path F2. For example, in case that the second valve 152 is opened, the second flow path F2 is opened, such that the bubbles B in the cylinder 121 may be discharged to the outside of the cylinder 121 through the second flow path F2. In case that the second valve 152 is closed, the second flow path F2 is closed, such that the discharge of the water in the cylinder 121 to the outside of the cylinder 121 may be cut off.

The third valve 153 may be disposed in the third flow path F3 and open or close the third flow path F3. For example, in case that the third valve 153 is opened, the third flow path F3 is opened, such that the bubbles B produced in the extraction space 130A of the extraction unit 130 may be discharged to the outside of the extraction unit 130 through the third flow path F3. In case that the third valve 153 is closed, the third flow path F3 is closed, such that the discharge of the water in the extraction space 130A to the outside of the extraction unit 130 may be cut off.

Meanwhile, the valve unit 150 may further include a fourth valve 154. The fourth valve 154 may be disposed in the fourth flow path F4 and prevent the water in the fourth flow path F4 from flowing reversely. The fourth valve 154 may be configured as a check valve, but this is provided for illustrative purposes only, and the present disclosure is not limited thereto.

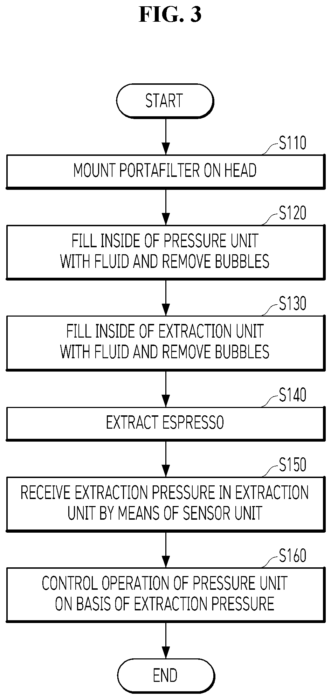

Hereinafter, the espresso extraction method according to several embodiments of the present disclosure will be described with reference to FIGS. 3 to 11. For convenience of description, the description will be made with reference to FIGS. 1 and 2.

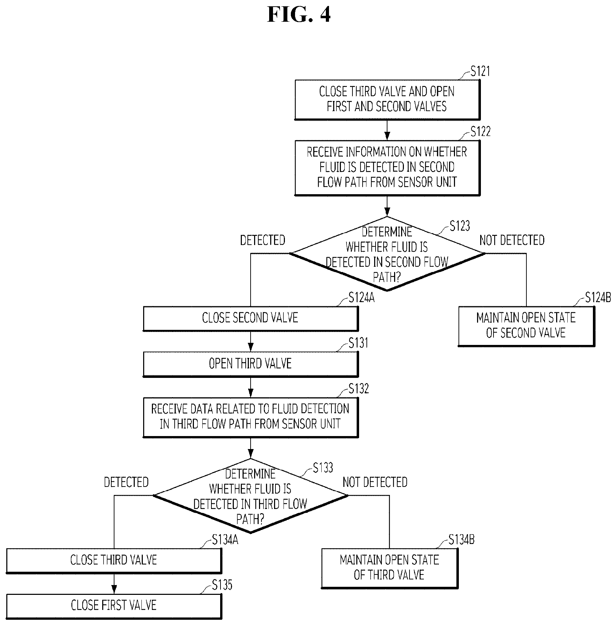

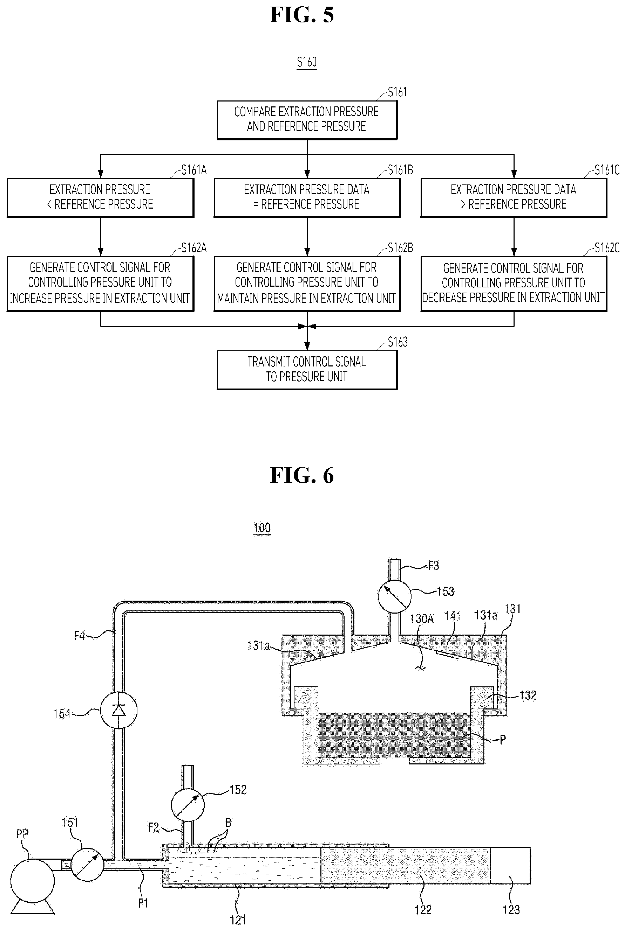

FIG. 3 is a flowchart of the espresso extraction method according to several embodiments of the present disclosure. FIGS. 4 and 5 are detailed flowcharts of the espresso extraction method according to several embodiments of the present disclosure. FIGS. 6 to 11 are cross-sectional views for explaining the espresso extraction method according to several embodiments of the present disclosure.

First, with reference to FIGS. 2 and 3, the portafilter 132 is mounted on the head 131 (S110).

Specifically, the portafilter 132 filled with the puck P is mounted on the head 131 (S110). In this case, the extraction space 130A may be defined between the head 131 and the portafilter 132 and filled with water later.

In step S110, all the valve units 150 may be kept open.

With reference back to FIGS. 3 and 4, the inside of the pressure unit 120 is filled with water, and the bubbles B are removed (S120). Step S120 may include step S121 of opening the first valve 151 and the second valve 152, step S122 of receiving information on whether the fluid is detected in the second flow path F2 from the sensor unit 140, step S123 of determining whether the fluid is detected in the second flow path F2, and steps S124A and S124B of controlling the opening/closing of the second valve 152.

Specifically, with reference to FIG. 6, the control unit 110 closes the third valve 153 and opens the first valve 151 and the second valve 152 (S121). Specifically, the control unit may close the third valve 153, open the first valve 151 to open the first flow path F1, and then operate the pump PP, such that the cylinder 121 may be filled with the water. In this case, the bubbles B may be produced in the cylinder 121. Therefore, the second valve 152 may be opened to open the second flow path F2, such that the bubbles B produced in the cylinder 121 may be discharged through the second flow path F2.

However, the present disclosure is not limited thereto. In step S121, the first valve 151, all the second valve 152, and the third valve 153 may, of course, be opened and operated.

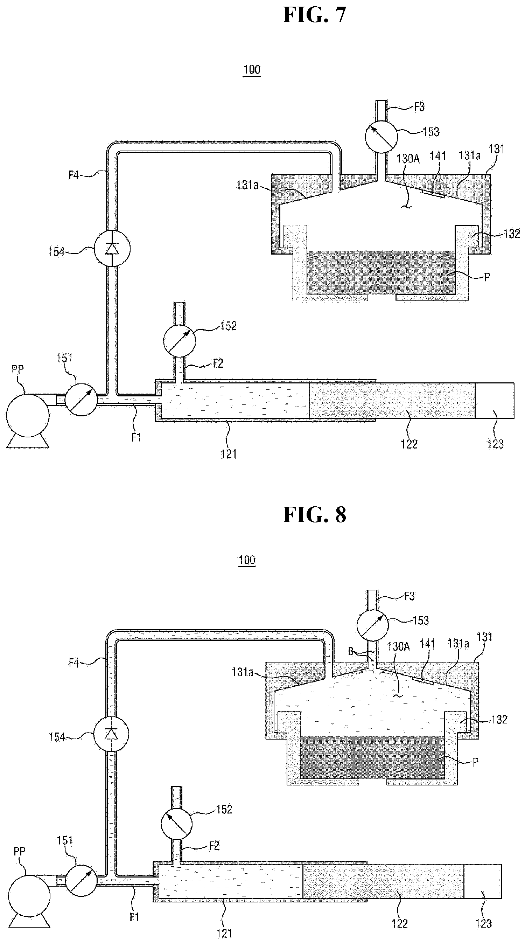

Next, with reference to FIGS. 4 and 7, the control unit 110 receives the information on whether the fluid is detected in the second flow path F2 from the sensor unit 140 (S122). In this case, the information on whether the fluid is detected indicates whether the fluid is detected at the other side of the second flow path F2.

Specifically, no water is detected at the other side of the second flow path F2 before all the bubbles B in the cylinder 121 are removed. The water is discharged after all the bubbles B in the cylinder 121 are removed, such that the water may be detected in the second flow path F2. Therefore, the sensor unit 140 may transmit, in real time, the information on whether the water is detected at the other side of the second flow path F2 to the control unit 110. That is, the control unit 110 may receive, in real time, the information on whether the water is detected or not detected at the other side of the second flow path F2 from the sensor unit 140.

Next, with reference to FIGS. 4 and 8, the control unit 110 determines whether the fluid is detected in the second flow path F2 (S123).

In this case, in case that the control unit 110 determines that the water is detected in the second flow path F2, the control unit 110 closes the second valve 152 (S124A). Therefore, the second flow path F2 is closed, such that the water in the cylinder 121 may not be discharged to the outside of the cylinder 121 through the second flow path F2.

On the contrary, in case that the control unit determines that no water is detected in the second flow path F2, the control unit 110 may perform control to maintain the open state of the second valve 152 (S124B).

In the espresso extraction method according to several embodiments of the present disclosure, the bubbles B may be produced in the cylinder 121 when the pressure unit 120 is filled with water. In this case, the second flow path F2 connected to the cylinder 121 may be opened, such that the bubbles B may be discharged to the outside of the cylinder 121 through the second flow path F2. Therefore, it is possible to reduce a degree to which the pressure generated by the pressure unit 120 becomes unstable because of the bubbles B during the subsequent operation of the pressure unit 120.

In addition, in case that the bubbles B in the cylinder 121 are not completely removed, the bubbles B in the cylinder 121 may be introduced into the extraction unit 130 through the fourth flow path F4. In this case, during the process of extracting espresso, the puck P of the portafilter 132 may be broken by the bubbles B, and the pressure applied to the puck P may be decreased to be equal to or lower than the reference pressure.

Therefore, the bubbles B in the cylinder 121 are completely removed before the process of extracting espresso, such that the amount of bubbles B introduced into the extraction unit 130 may be reduced. Therefore, the pressure applied to the puck P is constantly maintained, such that the espresso may be extracted by the constant pressure.

With reference back to FIGS. 3 and 4, the extraction unit 130 is filled with water, and the bubbles B are removed (S130). Step S130 may include step S131 of opening the third valve 153, step S132 of receiving information on whether the fluid is detected in the third flow path F3, step S133 of determining whether the fluid is detected in the third flow path F3, steps 134A and 134B of controlling the opening/closing of the third valve 153, and step S135 of closing the first valve 151.

Specifically, with reference to FIGS. 4 and 8, the control unit 110 opens the third valve 153 (S131). Specifically, in case that the control unit closes the second valve 152 and opens the third valve 153, the pressure unit 120 is not filled with water any further, such that the extraction unit 130 may be filled with the water supplied from the pump PP through the fourth flow path F4.

In case that the extraction space 130A of the extraction unit 130 is filled with water, the bubbles B may be produced in the extraction space 130A. In this case, the third valve 153 may be opened to open the third flow path F3, such that the bubbles B produced in the extraction space 130A may be discharged through the third flow path F3.

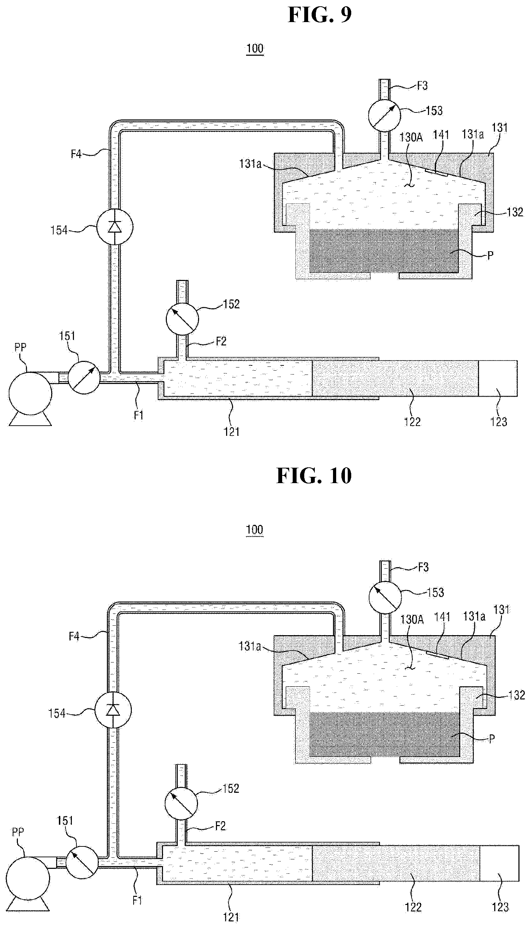

Next, with reference to FIGS. 4 and 9, the control unit 110 receives the information on whether the fluid is detected in the third flow path F3 from the sensor unit 140 (S132).

Specifically, no water is detected at the other side of the third flow path F3 before all the bubbles B in the extraction space 130A are removed. In case that the water is discharged after all the bubbles B in the extraction space 130A are removed, the water may be detected in the third flow path F3. Therefore, the sensor unit 140 may sense, in real time, whether the water is detected at the other side of the third flow path F3 and transmit the information on whether the water is detected at the other side of the third flow path F3 to the control unit 110.

Next, with reference to FIGS. 4 and 10, the control unit 110 determines whether the fluid is detected in the third flow path F3 (S133). In this case, in case that the control unit 110 determines that the water is detected in the third flow path F3, the control unit 110 closes the third valve 153 (S134A). Therefore, the third flow path F3 is closed, such that the water in the extraction space 130A may not be discharged to the outside of the extraction space 130A through the third flow path F3. On the contrary, in case that the control unit determines that no water is detected in the third flow path F3, the control unit 110 may perform control to maintain the open state of the third valve 153 (S134B).

In case that the third valve 153 is closed (S134A), the control unit 110 closes the first valve 151 (S135) to prevent the water from being additionally introduced into the espresso extraction device 100.

Meanwhile, in case that the extraction unit 130 is filled with water, the bubbles B may be produced in the extraction space 130A, the bubbles B remaining in the cylinder 121 may be introduced into the extraction unit 130. In this case, during the process of extracting espresso, the bubbles B may cause the instability of the extraction pressure of the extraction unit 130 or cause the puck P to be broken, such that the extraction pressure may become unstable or decrease.

However, in the espresso extraction method according to several embodiments of the present disclosure, the third flow path F3 connected to the extraction unit 130 may be opened, such that the bubbles B in the extraction space 130A may be discharged to the outside of the extraction unit 130 through the third flow path F3. That is, the bubbles B in the espresso extraction device 100 may be secondarily removed. Therefore, the occurrence of the bubbles B in the espresso extraction device 100 may be minimized, thereby preventing the problem in which the espresso extraction pressure becomes unstable or the puck P is broken because of the bubbles B during the process of extracting espresso. Further, it is possible to extract the espresso with a constant flavor. In addition, the extraction pressure may be equally maintained even though the espresso is continuously extracted.

In addition, the inclined surface is formed inside the head 131 and directed toward the third flow path F3, such that the bubbles B produced in the extraction space 130Amay be guided to the third flow path F3 along the inclined surface 131a of the head 131 and easily discharged to the outside of the extraction unit 130. Therefore, it is possible to maintain the constant espresso extraction pressure and extract espresso with a constant flavor by effectively removing the bubbles B in the espresso extraction device 100 before the process of extracting the espresso.

In addition, the espresso extraction method according to several embodiments of the present disclosure wets, in advance, the puck P with the water introduced into the extraction unit 130 before the process of extracting espresso, which may reduce a difference between the pressure of the water contained in the extraction space 130A and the pressure applied to the puck P during the process of extracting espresso. Therefore, it is possible to prevent the puck P from being broken by the pressure difference, thereby extracting the espresso with a constant flavor.

Next, as the first valve 151 is closed after the extraction space 130A is filled with the water, the espresso extraction device 100 may operate in an espresso extraction stand-by mode. That is, in the extraction stand-by mode of the espresso extraction device 100, all the first to third valves 153 may be closed.

Next, pressure may be applied to the water contained in the extraction space 130A so that the pressure in the extraction space 130A is the reference pressure (e.g., 8 atm to 9 atm).

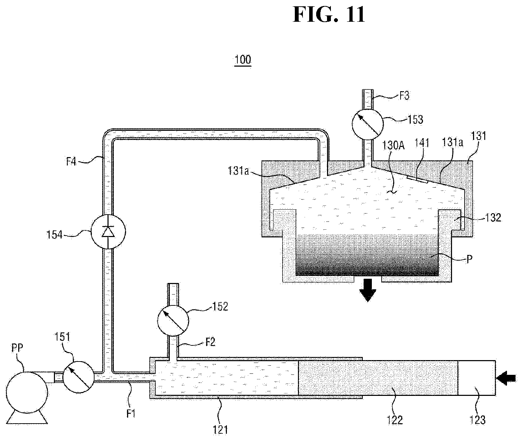

With reference back to FIGS. 3 and 11, the espresso extraction device 100 extracts espresso (S140). During the process of extracting espresso, the control unit 110 may receive, in real time, the extraction pressure in the extraction unit 130 from the sensor unit 140 (S150) and control the operation of the pressure unit 120 on the basis of the extraction pressure (S160).

Specifically, with reference to FIG. 5, the control unit 110 compares the extraction pressure and the reference pressure (S161).

In case that the extraction pressure is lower than the reference pressure (S161A), the control unit 110 generates a control signal for controlling the pressure unit 120 to increase the pressure in the extraction unit 130 (S162A). That is, in case that the extraction pressure is lower than the reference pressure (S161A), the control unit 110 may generate a control signal for controlling the motor 123 to increase the speed of the piston 122. For example, in case that the extraction pressure measured in the extraction unit 130 is 8 atm or lower, the control unit 110 may generate a control signal for increasing the speed of the piston 122 so that the extraction pressure becomes 9 atm.

In addition, in case that the extraction pressure is equal to the reference pressure (S161B), the control unit 110 generates a control signal for controlling the pressure unit 120 to maintain the pressure in the extraction unit 130 (S162B). That is, in case that the extraction pressure is equal to the reference pressure (S161B) (or the extraction pressure is within a predetermined error range), the control unit 110 may generate a control signal for controlling the motor 123 to maintain the speed of the piston 122. For example, in case that the extraction pressure measured in the extraction unit 130 is 8 atm or higher and 9 atm or lower, the control unit 110 generates a control signal for maintaining the speed of the piston 122 to maintain the extraction pressure.

In addition, in case that the extraction pressure is higher than the reference pressure (S161C), the control unit 110 generates a control signal for controlling the pressure unit 120 to reduce the pressure in the extraction unit 130 (S162C). That is, in case that the extraction pressure is higher than the reference pressure (S161C), the control unit 110 may generate a control signal for controlling the motor 123 to reduce the speed of the piston 122. For example, in case that the extraction pressure measured in the extraction unit 130 is 9 atm or higher, the control unit 110 generates a control signal for reducing the speed of the piston 122 so that the extraction pressure becomes 9 atm.

Next, the control unit 110 transmits the generated control signal to the pressure unit 120 (S163). That is, the control unit 110 transmits a control signal to the pressure unit 120 so that the motor 123 of the pressure unit 120 operates. Therefore, the motor 123 may control the pressure of the pressure unit 120 by controlling the speed of the piston 122 in response to the control signal.

In general, espresso is extracted by using vapor pressure of water with a relatively high temperature at the time of extracting the espresso. In this case, this method easily makes hot coffee. However, it is cumbersome to have to add extra cold water or ice to the hot coffee to make warm or cold coffee.

However, the espresso extraction method according to several embodiments of the present disclosure may extract espresso regardless of a water temperature by extracting the espresso by controlling the extraction pressure of the extraction unit 130. Therefore, the espresso extraction method may extract espresso with a desired temperature by supplying water with a temperature suitable for a temperature of coffee intended to be made by the espresso extraction device 100, thereby eliminating the difficulty in making coffee with a desired temperature.

In addition, the espresso extraction method according to several embodiments of the present disclosure may adjust, in real time, the pressure, which is generated by the pressure unit 120, on the basis of the extraction pressure of the extraction unit 130. Specifically, the control unit 110 may receive, in real time, the extraction pressure of the extraction unit 130 from the sensor unit 140, compare the extraction pressure and the reference pressure, and control, in real time, the operation of the pressure unit 120 on the basis of the compared pressures.

That is, in case that the extraction pressure is higher than the reference pressure, the control unit 110 may perform control to decrease the pressure of the extraction unit 130. In case that the extraction pressure is lower than the reference pressure, the control unit 110 may perform control to increase the pressure of the extraction unit 130. Therefore, the espresso extraction method of the present disclosure may monitor, in real time, the extraction pressure of the extraction unit 130 and perform feedback, thereby maintaining the constant extraction pressure and extracting espresso with a constant flavor.

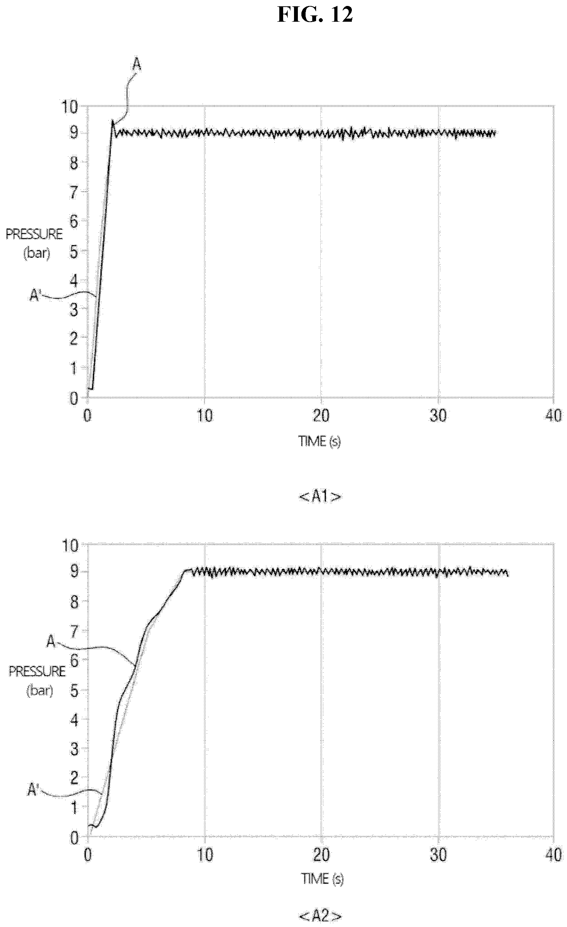

FIG. 12 is a graph showing an experimental result of the espresso extraction device and the espresso extraction method according to several embodiments of the present disclosure.

FIG. 12 is a graph for explaining an error between an extraction pressure A and an input control signal A' in the espresso extraction device 100. In addition, <A1> is a graph according to an experimental result during underdamping of the espresso extraction device 100, and <A2> is a graph according to an experimental result during overdamping of the espresso extraction device 100. In this case, the reference pressure is set to 9 atm (9 bar).

With reference to FIG. 12, it can be seen that the extraction pressure A has a waveform similar to that of the input control signal A' in the espresso extraction device 100 according to several embodiments of the present disclosure.

Specifically, it can be seen that in the espresso extraction device 100 according to several embodiments of the present disclosure, the extraction pressure A increases in proportion to the input control signal A', and an error between the extraction pressure A and the input control signal A' is small.

For example, in case that the input control signal A' is applied to the pressure unit 120 of the espresso extraction device 100, the extraction pressure A may increase in proportion to the applied input control signal A'. In addition, it can be seen that the input control signal A' with 9 atm is applied, the extraction pressure A may also reach 9 atm. It can be seen that the extraction pressure A is also maintained to be the reference pressure for the time for which the input control signal A' with 9 atm is applied.

In addition, it can be seen that in the espresso extraction device 100 of the present disclosure, the extraction pressure A may increase in proportion to the input control signal A' even during underdamping or overdamping. The extraction pressure A is constantly maintained to be the reference pressure while the input control signal A' is maintained.

Therefore, the espresso extraction device 100 according to several embodiments of the present disclosure may efficiently adjust the pressure applied to the extraction unit 130 and maintain the extraction pressure A to be the reference pressure by reducing an error between the pressure applied to the pressure unit 120 and the pressure applied to the extraction unit 130 at the time of extracting espresso. Therefore, it is possible to extract espresso with the constant pressure and extract the espresso with a constant flavor.

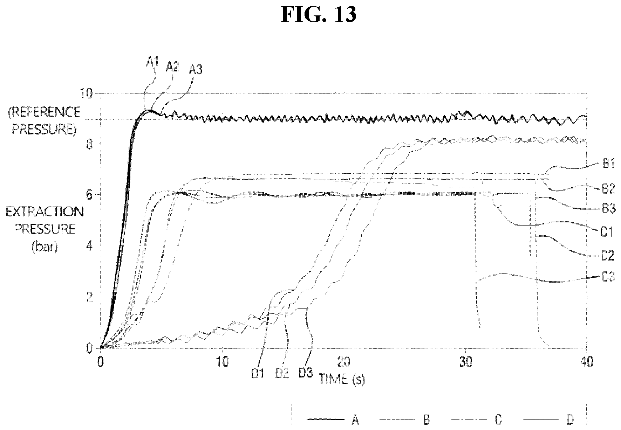

FIG. 13 is a graph showing experimental results of the espresso extraction method of the espresso extraction device according to several embodiments of the present disclosure and an espresso extraction method of an espresso extraction device according to a comparison group.

FIG. 13 is a graph showing extraction pressures over time related to the espresso extraction device A (100) according to several embodiments of the present disclosure and espresso extraction devices B, C, and D of other manufacturers. In the present experiment, pressures between the espresso extraction units and the portafilters of the devices A, B, C, and D were measured as the extraction pressures. The changes in extraction pressures were measured for about 40 seconds after the time points at which the extraction pressures were generated when the devices A, B, C, and D extracted espresso three times. In this case, the alphabet letters represent the respective companies, and the numbers represent the number of times the espresso is extracted. For example, A3 means that the espresso extraction device 100 of Company A, i.e., the present disclosure continuously extracted espresso three times. In addition, in the present experiment, the reference pressure was set to 9 atm, the rapid decrease in extraction pressure toward 0 means the end of extraction of espresso.

First, with reference to A1, A2, and A3, it can be seen that in the espresso extraction device 100 according to several embodiments of the present disclosure, the extraction pressure reaches the reference pressure within about 5 seconds. In addition, the espresso extraction device 100 of the present disclosure operates to have similar waveforms both when espresso is extracted for the second time (A2) and when espresso is extracted for the third time (A3) to a waveform when espresso is extracted for the first time.

That is, it can be seen that even though the espresso extraction device 100 of the present disclosure continuously extracts espresso multiple times, the extraction pressure reaches the reference pressure within about 5 seconds, and the extraction pressure is constantly maintained to be the reference pressure until the extraction is ended.

Next, it can be seen that the extraction pressures of the espresso extraction devices of Companies B, C, and D will be described. It can be seen that all the extraction pressures in the devices of Companies B, C, and D did not reach the reference pressure. Specifically, it can be seen that the extraction pressure was measured as about 6 to 7 atm in the espresso extraction device of Company B, the extraction pressure was measured as about 6 atm in the espresso extraction device of Company C, and the extraction pressure was measured as about 8 atm in the espresso extraction device of Company D. That is, it can be seen that even though all the pressures generated by the pressure units of Companies B, C, and D were set to 9 atm, the extraction pressure measured in the extraction unit caused an error with the pressure generated by the pressure unit could not reach the reference pressure.

In addition, it can be seen that in the espresso extraction devices of Companies B, C, and D, the extraction pressure duration time and the extraction pressure vary depending on the number of times of extraction.

Specifically, with reference to B1, B2, and B3, in case that the espresso extraction device of Company B extracts espresso for the first time (B 1), the constant extraction pressure is maintained until the extraction is ended after the extraction is started within about 10 seconds.

However, it can be seen that in the espresso extraction device of Company B, the pressure more quickly reaches the extraction pressure when espresso is extracted for the second time (B2) and when espresso is extracted for the third time (B3) than when espresso is extracted for the first time (B 1), but the extraction pressure becomes unstable over time. Specifically, it can be seen that the extraction pressure when espresso is extracted for the second time (B2) is lower than the extraction pressure when espresso is extracted for the first time (B 1). In particular, it can be seen that the extraction pressure when espresso is extracted for the third time (B3) is unstable, and the extraction of espresso is more quickly ended when espresso is extracted for the third time (B3) than when espresso is extracted for the first time (B1) and when espresso is extracted for the second time (B2). That is, it can be seen that in case that the espresso extraction device of Company B continuously extracts espresso, the extraction pressure is unstable, and the extraction pressure duration time and the extraction duration time are changed.

Next, with reference to C1, C2, and C3, it can be seen that the espresso extraction device of Company C starts the extraction within about 5 seconds when espresso is extracted for the first time (C1), when espresso is extracted for the second time (C2), and when espresso is extracted for the third time (C3).

However, it can be seen that in the espresso extraction device of Company C, the extraction end time is somewhat earlier when espresso is extracted for the second time (C2) and when espresso is extracted for the third time (C3) than when espresso is extracted for the first time (C1). Specifically, it can be seen that the extraction end time is about 35 seconds when espresso is extracted for the first time (C1), but the extraction is ended when espresso is extracted for the second time (C2) before the extraction end time when the espresso is extracted for the first time (C1) is reached. In particular, the extraction is more quickly ended when espresso is extracted for the third time (C3). In addition, it can be seen that the extraction pressure is more unstable when espresso is extracted for the second time (C2) and when espresso is extracted for the third time (C3) than when espresso is extracted for the first time (C1). That is, it can be seen that in case that the espresso extraction device of Company C continuously extracts espresso, the extraction pressure is unstable, and the extraction pressure duration time and the extraction duration time are changed.

Lastly, with reference to D1 to D3, it can be seen that in the espresso extraction device of Company D, the extraction pressure, the extraction pressure duration time, and the extraction end time are constant at about 8 atm when espresso is extracted for the first time (D1), for the second time (D2), and for the third time (D3).

However, it can be seen that in the espresso extraction device of Company D, the extraction pressure arrival time is somewhat later when espresso is extracted for the second time (D2) and when espresso is extracted for the third time (D3) than when espresso is extracted for the first time (D1). Specifically, it can be seen that the extraction pressure arrival time is later when espresso is extracted for the second time (D2) and when espresso is extracted for the third time (D3) and the extraction pressure arrival time when espresso is extracted for the first time (D1). That is, it can be seen that in case that the espresso extraction device of Company D continuously extracts espresso, the extraction pressure arrival time is somewhat delayed.

As described above, it can be seen that in the espresso extraction device 100 according to several embodiments of the present disclosure, the time for which the extraction pressure reaches the reference pressure is earlier, and the extraction pressure, the extraction pressure duration time, and the extraction end time are constantly maintained each time espresso is extracted even though the espresso extraction device 100 continuously extracts espresso multiple times. That is, it is possible to extract the espresso with a constant flavor by extracting the espresso with the constant extraction pressure for the constant extraction time at the time of continuously extracting the

## Claims

1. An espresso extraction method, which is performed by a control unit (110) configured to control an operation of a valve unit (150) and of a pressure unit (120) configured to adjust pressure applied to an extraction unit (130) of an espresso extraction device (100) based on sensing data of a sensor unit (140) provided in the extraction unit (130), wherein the valve unit (150) comprises a first valve (151) configured to control a flow rate of a fluid to be supplied to the pressure unit (120) and the extraction unit (130) via a first flow path (F1), the espresso extraction method comprising:
extracting espresso by applying pressure to a fluid which is contained in the extraction unit (130) by operating the pressure unit (120);
receiving extraction pressure in the extraction unit (130) by means of the sensor unit (140); and
controlling the operation of the pressure unit (120) based on the extraction pressure,
the method being **characterized**
**in that** it further comprises:
removing bubbles in the pressure unit (120) by filling the pressure unit (120) with a fluid and controlling the operation of the valve unit (150), when a portafilter (132) is mounted on a head (131) of the extraction unit (130); and
removing bubbles in the extraction unit (130) by filling the extraction unit (130) with a fluid and controlling the operation of the valve unit (150);
**in that** the valve unit (150) further comprises:
a second valve (152) configured to be controlled to be opened or closed so that a second flow path (F2), which has one side connected to the pressure unit (120) and the other side opened, is opened or closed based on whether a fluid is detected in the second flow path (F2); and
a third valve (153) configured to be controlled to be opened or closed so that a third flow path (F3), which has one side connected to the extraction unit (130) and the other side opened, is opened or closed on the basis of whether a fluid is detected in the third flow path (F3),
wherein a fluid is supplied into the pressure unit (120) when the first and second valves (151, 152) are opened,
wherein a fluid is supplied into the extraction unit (130) when the first and third valves (151, 153) are opened and the second valve is closed,
wherein the first valve (151) is closed when the second and the third valves (152, 153) are closed; and
**in that** the head (131) comprises one or more surfaces (131a) inclined toward one side of the third flow path (F3) from an inner surface of the head (131).

2. The espresso extraction method of claim 1, wherein the receiving of the extraction pressure and the controlling of the operation of the pressure unit (120) are performed in real time while the extracting of the espresso is conducted.

3. The espresso extraction method of claim 1, wherein the controlling of the operation of the pressure unit (120) comprises:
comparing the extraction pressure and a reference pressure:
generating a control signal based on the compared pressures; and
transmitting the control signal to the pressure unit (120).

4. The espresso extraction method of claim 3, wherein the generating of the control signal comprises:
generating a control signal for controlling the pressure unit (120) in order to decrease pressure in the extraction unit (130) when the extraction pressure is higher than the reference pressure;
generating a control signal for controlling the pressure unit (120) in order to increase pressure in the extraction unit (130) when the extraction pressure is lower than the reference pressure; and
generating a control signal for controlling the pressure unit (120) in order to maintain pressure in the extraction unit (130) when the extraction pressure is equal to the reference pressure.

5. The espresso extraction method of claim 1, wherein the removing of bubbles in the pressure unit (120) comprises:
closing the third valve (153) and opening the first and the second valves (151, 152);
receiving information on whether a fluid is detected at the other side of the second flow path (F2) from the sensor unit (140); and
controlling opening or closing of the second valve (152) by determining whether a fluid is detected at the other side of the second flow path (F2).

6. The espresso extraction method of claim 1, wherein the removing of bubbles in the extraction unit (130) comprises:
opening the third valve (153);
receiving information on whether a fluid is detected at the other side of the third flow path from the sensor unit (140); and
controlling opening or closing of the first and the third valves (151, 153) by determining whether a fluid is detected at the other side of the third flow path (F3).

7. An espresso extraction device comprising:
an extraction unit (130) comprising a head (131) on which a portafilter (132) is mounted, the head (131) being configured to define a space (130A) together with the portafilter (132);
a pressure unit (120) configured to apply pressure to the extraction unit (130);
a sensor unit (140) configured to detect extraction pressure in the extraction unit (130);
a control unit (110) configured to generate a control signal by comparing the extraction pressure and a reference pressure and control, in real time, an operation of the pressure unit (120) in response to the control signal; and
a valve unit (150) configured to control an introduction of a fluid into and a discharge of a fluid from the pressure unit (120) or the extraction unit (130),
wherein the valve unit (150) comprises:
a first valve (151) configured to control a flow rate of a fluid to be supplied to the pressure unit (120) and the extraction unit (130) by a first flow path (F1);
**characterized**
**in that** the valve unit (150) further comprises:
a second valve (152) configured to open or close a second flow path (F2) having one side connected to the pressure unit (120) and the other side opened; and
a third valve (153) configured to open or close a third flow path (F3) having one side connected to the extraction unit (130) and the other side opened,
wherein the sensor unit (140) is configured to sense whether a fluid is detected in the second flow path (F2) or the third flow path (F3),
wherein the control unit (110) is configured to control an operation of the second valve (152) in order to close the second valve (152) when it is determined that a fluid is detected at the other side of the second flow path (F2),
wherein the control unit (110) is configured to control an operation of the third valve (153) in order to close the third valve (153) when it is determined that a fluid is detected at the other side of the third flow path (F3),
wherein the control unit (110) is configured to control an operation of the first valve (151) to close the first valve (151) when the second and the third valves (152, 153) are closed, and
**in that** the head (131) comprises one or more surfaces (131a) inclined toward one side of the third flow path (F3) from an inner surface of the head (131).

8. The espresso extraction device of claim 7, wherein the control unit (110) is configured to control a speed of the pressure unit (120) to decrease pressure in the extraction unit (130) when the extraction pressure is higher than the reference pressure,
wherein the control unit (110) is configured to control the speed of the pressure unit (120) in order to increase pressure in the extraction unit (130) when the extraction pressure is lower than the reference pressure, and
wherein the control unit (110) is configured to control a speed of the pressure unit (120) in order to maintain pressure in the extraction unit (130) when the extraction pressure is equal to the reference pressure.

9. The espresso extraction device of claim 7, wherein the sensor unit (140) comprises:
fluid detection sensors disposed at the other side of the first flow path (F1) and the other side of the second flow path (F2) and configured to detect a fluid at the other side of the first flow path (F1) and the other side of the second flow path (F2); and
a pressure sensor (141) configured to measure extraction pressure of the extraction unit (130).

## Patentansprüche

1. Espresso-Extraktionsverfahren, das durch eine Steuereinheit (110) durchgeführt wird, die konfiguriert ist, um einen Betrieb einer Ventileinheit (150) und einer Druckeinheit (120) zu steuern, die konfiguriert ist, um einen Druck, der auf eine Extraktionseinheit (130) einer Espresso-Extraktionsvorrichtung (100) ausgeübt wird, basierend auf Erfassungsdaten einer Sensoreinheit (140) einzustellen, die in der Extraktionseinheit (130) bereitgestellt ist, wobei die Ventileinheit (150) ein erstes Ventil (151) umfasst, das konfiguriert ist, um eine Durchflussrate eines Fluids zu steuern, das der Druckeinheit (120) und der Extraktionseinheit (130) über einen ersten Durchflussweg (F1) zugeführt werden soll, das Espresso-Extraktionsverfahren umfassend:
Extrahieren von Espresso durch Ausüben von Druck auf ein Fluid, das in der Extraktionseinheit (130) enthalten ist, durch Betreiben der Druckeinheit (120);
Empfangen von Extraktionsdruck in der Extraktionseinheit (130) mittels der Sensoreinheit (140); und
Steuern des Betriebs der Druckeinheit (120) basierend auf dem Extraktionsdruck,
wobei das Verfahren **dadurch gekennzeichnet ist,**
**dass** es ferner umfasst:
Entfernen von Blasen in der Druckeinheit (120) durch Befüllen der Druckeinheit (120) mit einem Fluid und Steuern des Betriebs der Ventileinheit (150), wenn ein Siebträger (132) auf einem Kopf (131) der Extraktionseinheit (130) montiert ist; und
Entfernen von Blasen in der Extraktionseinheit (130) durch Befüllen der Extraktionseinheit (130) mit einem Fluid und Steuern des Betriebs der Ventileinheit (150);
**dass** die Ventileinheit (150) ferner umfasst:
ein zweites Ventil (152), das konfiguriert ist, um gesteuert zu werden, um geöffnet oder geschlossen zu werden, so dass ein zweiter Durchflussweg (F2), der eine Seite mit der Druckeinheit (120) verbunden und die andere Seite geöffnet aufweist, geöffnet oder geschlossen wird, basierend darauf, ob in dem zweiten Durchflussweg (F2) ein Fluid erkannt wird; und
ein drittes Ventil (153), das konfiguriert ist, um gesteuert zu werden, um geöffnet oder geschlossen zu werden, so dass ein dritter Durchflussweg (F3), der eine Seite mit der Extraktionseinheit (130) verbunden und die andere Seite geöffnet aufweist, geöffnet oder geschlossen wird, auf der Basis darauf, ob in dem dritten Durchflussweg (F3) ein Fluid erkannt wird,
wobei ein Fluid in die Druckeinheit (120) zugeführt wird, wenn das erste und das zweite Ventil (151, 152) geöffnet sind,
wobei ein Fluid in die Extraktionseinheit (130) zugeführt wird, wenn das erste und das dritte Ventil (151, 153) geöffnet sind und das zweite Ventil geschlossen ist,
wobei das erste Ventil (151) geschlossen ist, wenn das zweite und das dritte Ventil (152, 153) geschlossen sind; und
**dass** der Kopf (131) eine oder mehrere Oberflächen (131a) umfasst, die von einer Innenoberfläche des Kopfes (131) zu einer Seite des dritten Durchflusswegs (F3) geneigt sind.

2. Espresso-Extraktionsverfahren nach Anspruch 1, wobei das Empfangen des Extraktionsdrucks und das Steuern des Betriebs der Druckeinheit (120) in Echtzeit durchgeführt werden, während das Extrahieren des Espressos durchgeführt wird.

3. Espresso-Extraktionsverfahren nach Anspruch 1, wobei das Steuern des Betriebs der Druckeinheit (120) umfasst:
Vergleichen des Extraktionsdrucks mit einem Referenzdruck:
Erzeugen eines Steuersignals basierend auf den verglichenen Drücken; und
Übertragen des Steuersignals an die Druckeinheit (120).

4. Espresso-Extraktionsverfahren nach Anspruch 3, wobei das Erzeugen des Steuersignals umfasst:
Erzeugen eines Steuersignals zum Steuern der Druckeinheit (120), um den Druck in der Extraktionseinheit (130) zu verringern, wenn der Extraktionsdruck höher als der Referenzdruck ist;
Erzeugen eines Steuersignals zum Steuern der Druckeinheit (120), um den Druck in der Extraktionseinheit (130) zu erhöhen, wenn der Extraktionsdruck niedriger als der Referenzdruck ist; und
Erzeugen eines Steuersignals zum Steuern der Druckeinheit (120), um den Druck in der Extraktionseinheit (130) aufrechtzuerhalten, wenn der Extraktionsdruck gleich dem Referenzdruck ist.

5. Espresso-Extraktionsverfahren nach Anspruch 1, wobei das Entfernen von Blasen in der Druckeinheit (120) umfasst:
Schließen des dritten Ventils (153) und Öffnen des ersten und des zweiten Ventils (151, 152);
Empfangen von Informationen von der Sensoreinheit (140) darüber, ob auf der anderen Seite des zweiten Durchflusswegs (F2) ein Fluid erkannt wird; und
Steuern des Öffnens oder des Schließens des zweiten Ventils (152) durch Bestimmen, ob auf der anderen Seite des zweiten Durchflusswegs (F2) ein Fluid erkannt wird.

6. Espresso-Extraktionsverfahren nach Anspruch 1, wobei das Entfernen von Blasen in der Extraktionseinheit (130) umfasst:
Öffnen des dritten Ventils (153);
Empfangen von Informationen von der Sensoreinheit (140) darüber, ob auf der anderen Seite des dritten Durchflusswegs ein Fluid erkannt wird; und
Steuern des Öffnens oder des Schließens des ersten und des dritten Ventils (151, 153) durch Bestimmen, ob auf der anderen Seite des dritten Durchflusswegs (F3) ein Fluid erkannt wird.

7. Espresso-Extraktionsvorrichtung, umfassend:
eine Extraktionseinheit (130), umfassend einen Kopf (131), auf dem ein Siebträger (132) montiert ist, wobei der Kopf (131) konfiguriert ist, um zusammen mit dem Siebträger (132) einen Raum (130A) zu definieren;
eine Druckeinheit (120), die konfiguriert ist, um Druck auf die Extraktionseinheit (130) auszuüben;
eine Sensoreinheit (140), die konfiguriert ist, um den Extraktionsdruck in der Extraktionseinheit (130) zu erkennen;
eine Steuereinheit (110), die konfiguriert ist, um durch Vergleichen des Extraktionsdrucks mit einem Referenzdruck ein Steuersignal zu erzeugen und in Echtzeit einen Betrieb der Druckeinheit (120) als Reaktion auf das Steuersignal zu steuern; und
eine Ventileinheit (150), die konfiguriert ist, um eine Einleitung eines Fluids in die Druckeinheit (120) oder die Extraktionseinheit (130) und eine Ableitung eines Fluids daraus zu steuern,
wobei die Ventileinheit (150) umfasst:
ein erstes Ventil (151), das konfiguriert ist, um eine Durchflussrate eines Fluids zu steuern, das der Druckeinheit (120) und der Extraktionseinheit (130) über einen ersten Durchflussweg (F1) zugeführt werden soll;
**dadurch gekennzeichnet,**
**dass** die Ventileinheit (150) ferner umfasst:
ein zweites Ventil (152), das konfiguriert ist, um einen zweiten Durchflussweg (F2) zu öffnen oder zu schließen, der eine Seite mit der Druckeinheit (120) verbunden und die andere Seite geöffnet aufweist; und
ein drittes Ventil (153), das konfiguriert ist, um einen dritten Durchflussweg (F3) zu öffnen oder zu schließen, der eine Seite mit der Extraktionseinheit (130) verbunden und die andere Seite geöffnet aufweist,
wobei die Sensoreinheit (140) konfiguriert ist, um zu erfassen, ob ein Fluid in dem zweiten Durchflussweg (F2) oder in dem dritten Durchflussweg (F3) erkannt wird,
wobei die Steuereinheit (110) konfiguriert ist, um einen Betrieb des zweiten Ventils (152) zu steuern, um das zweite Ventil (152) zu schließen, wenn bestimmt wird, dass auf der anderen Seite des zweiten Durchflusswegs (F2) ein Fluid erkannt wird,
wobei die Steuereinheit (110) konfiguriert ist, um einen Betrieb des dritten Ventils (153) zu steuern, um das dritte Ventil (153) zu schließen, wenn bestimmt wird, dass auf der anderen Seite des dritten Durchflusswegs (F3) ein Fluid erkannt wird,
wobei die Steuereinheit (110) konfiguriert ist, um einen Betrieb des ersten Ventils (151) zu steuern, um das erste Ventil (151) zu schließen, wenn das zweite und das dritte Ventil (152, 153) geschlossen sind, und
**dass** der Kopf (131) eine oder mehrere Oberflächen (131a) umfasst, die von einer Innenoberfläche des Kopfes (131) zu einer Seite des dritten Durchflusswegs (F3) geneigt sind.

8. Espresso-Extraktionsvorrichtung nach Anspruch 7, wobei die Steuereinheit (110) konfiguriert ist, um eine Geschwindigkeit der Druckeinheit (120) zu steuern, um den Druck in der Extraktionseinheit (130) zu verringern, wenn der Extraktionsdruck höher als der Referenzdruck ist,
wobei die Steuereinheit (110) konfiguriert ist, um die Geschwindigkeit der Druckeinheit (120) zu steuern, um den Druck in der Extraktionseinheit (130) zu erhöhen, wenn der Extraktionsdruck niedriger als der Referenzdruck ist, und
wobei die Steuereinheit (110) konfiguriert ist, um eine Geschwindigkeit der Druckeinheit (120) zu steuern, um den Druck in der Extraktionseinheit (130) aufrechtzuerhalten, wenn der Extraktionsdruck gleich dem Referenzdruck ist.

9. Espresso-Extraktionsvorrichtung nach Anspruch 7, wobei die Sensoreinheit (140) umfasst:
Fluiderkennungssensoren, die auf der anderen Seite des ersten Durchflusswegs (F1) und der anderen Seite des zweiten Durchflusswegs (F2) angeordnet sind und konfiguriert sind, um ein Fluid auf der anderen Seite des ersten Durchflusswegs (F1) und der anderen Seite des zweiten Durchflusswegs (F2) zu erkennen; und
einen Drucksensor (141), der konfiguriert ist, um den Extraktionsdruck der Extraktionseinheit (130) zu messen.

## Revendications

1. Procédé d'extraction d'expresso, réalisée par une unité de commande (110) conçue pour commander un fonctionnement d'une unité de soupape (150) et d'une unité de pression (120) conçue pour ajuster la pression appliquée à une unité d'extraction (130) d'un dispositif d'extraction d'expresso (100) sur la base de données de détection d'une unité de capteur (140) fournie dans l'unité d'extraction (130), dans lequel l'unité de soupape (150) comprend une première soupape (151) conçue pour commander un débit d'un fluide à fournir à l'unité de pression (120) et à l'unité d'extraction (130) par le biais d'une première voie d'écoulement (F1), le procédé d'extraction d'expresso comprenant :
l'extraction de l'expresso par application d'une pression à un fluide contenu dans l'unité d'extraction (130) en actionnant l'unité de pression (120) ;
la réception de la pression d'extraction dans l'unité d'extraction (130) au moyen de l'unité de capteur (140) ; et
la commande du fonctionnement de l'unité de pression (120) sur la base de la pression d'extraction,
le procédé étant **caractérisé**
**en ce qu'il** comprend en outre :
l'élimination de bulles dans l'unité de pression (120) en remplissant l'unité de pression (120) d'un fluide et en commandant le fonctionnement de l'unité de soupape (150), lorsqu'un porte-filtre (132) est monté sur une tête (131) de l'unité d'extraction (130) ; et
l'élimination de bulles dans l'unité d'extraction (130) en remplissant l'unité d'extraction (130) d'un fluide et en commandant le fonctionnement de l'unité de soupape (150) ;
**en ce que** l'unité de soupape (150) comprend en outre :
une deuxième soupape (152) conçue pour être commandée afin d'être ouverte ou fermée de sorte qu'une deuxième voie d'écoulement (F2), dont un côté est relié à l'unité de pression (120) et l'autre côté ouvert, est ouverte ou fermée sur la base de la détection d'un fluide dans la deuxième voie d'écoulement (F2) ; et
une troisième soupape (153) conçue pour être commandée afin d'être ouverte ou fermée de sorte qu'une troisième voie d'écoulement (F3), dont un côté est relié à l'unité d'extraction (130) et l'autre côté ouvert, est ouverte ou fermée sur la base de la détection d'un fluide dans la troisième voie d'écoulement (F3),
dans lequel un fluide est fourni dans l'unité de pression (120) lorsque les première et deuxième soupapes (151, 152) sont ouvertes,
dans lequel un fluide est fourni dans l'unité d'extraction (130) lorsque les première et troisième soupapes (151, 153) sont ouvertes et que la deuxième vanne est fermée,
dans lequel la première soupape (151) est fermée lorsque les deuxième et troisième soupapes (152, 153) sont fermées ; et
**en ce que** la tête (131) comprend une ou plusieurs surfaces (131a) inclinées vers un côté de la troisième voie d'écoulement (F3) à partir d'une surface intérieure de la tête (131).

2. Procédé d'extraction d'expresso selon la revendication 1, dans lequel la réception de la pression d'extraction et la commande du fonctionnement de l'unité de pression (120) sont réalisés en temps réel pendant l'extraction de l'expresso.

3. Procédé d'extraction d'expresso selon la revendication 1, dans lequel la commande du fonctionnement de l'unité de pression (120) comprend :
la comparaison de la pression d'extraction et d'une pression de référence :
la génération d'un signal de commande sur la base des pressions comparées ; et
la transmission du signal de commande à l'unité de pression (120).

4. Procédé d'extraction d'expresso selon la revendication 3, dans lequel la génération du signal de commande comprend :
la génération d'un signal de commande pour commander l'unité de pression (120) afin de réduire la pression dans l'unité d'extraction (130) lorsque la pression d'extraction est supérieure à la pression de référence ;
la génération d'un signal de commande pour commander l'unité de pression (120) afin d'augmenter la pression dans l'unité d'extraction (130) lorsque la pression d'extraction est inférieure à la pression de référence ; et
la génération d'un signal de commande pour commander l'unité de pression (120) afin de maintenir la pression dans l'unité d'extraction (130) lorsque la pression d'extraction est égale à la pression de référence.

5. Procédé d'extraction d'expresso selon la revendication 1, dans lequel l'élimination de bulles dans l'unité de pression (120) comprend :
la fermeture de la troisième soupape (153) et l'ouverture des première et deuxième soupapes (151, 152) ;
la réception en provenance de l'unité de capteur (140) d'informations indiquant si un fluide est détecté de l'autre côté de la deuxième voie d'écoulement (F2) ; et
la commande de l'ouverture ou la fermeture de la seconde soupape (152) en déterminant si un fluide est détecté de l'autre côté de la deuxième voie d'écoulement (F2).

6. Procédé d'extraction d'expresso selon la revendication 1, dans lequel l'élimination de bulles dans l'unité d'extraction (130) comprend :
l'ouverture de la troisième soupape (153) ;
la réception en provenance de l'unité de capteur (140) d'informations indiquant si un fluide est détecté de l'autre côté de la troisième voie d'écoulement ; et
la commande de l'ouverture ou la fermeture des première et troisième soupapes (151, 153) en déterminant si un fluide est détecté de l'autre côté de la troisième voie d'écoulement (F3).

7. Dispositif d'extraction d'expresso comprenant :
une unité d'extraction (130) comprenant une tête (131) sur laquelle est monté un porte-filtre (132), la tête (131) étant conçue pour définir un espace (130A) avec le porte-filtre (132) ;
une unité de pression (120) conçue pour appliquer une pression à l'unité d'extraction (130) ;
une unité de capteur (140) configurée pour détecter la pression d'extraction dans l'unité d'extraction (130) ;
une unité de commande (110) configurée pour générer un signal de commande en comparant la pression d'extraction et une pression de référence et commander, en temps réel, un fonctionnement de l'unité de pression (120) en réponse au signal de commande ; et
une unité de soupape (150) conçue pour commander une introduction d'un fluide dans l'unité de pression (120) ou l'unité d'extraction (130) et l'évacuation d'un fluide à partir de ces dernières,
dans lequel l'unité de soupape (150) comprend :
une première soupape (151) conçue pour commander le débit d'un fluide à fournir à l'unité de pression (120) et à l'unité d'extraction (130) par une première voie d'écoulement (F1) ;
**caractérisé**
**en ce que** l'unité de soupape (150) comprend en outre :
une deuxième soupape (152) conçue pour ouvrir ou fermer une deuxième voie d'écoulement (F2) dont un côté est relié à l'unité de pression (120) et l'autre côté est ouvert ; et
une troisième soupape (153) conçue pour ouvrir ou fermer une troisième voie d'écoulement (F3) dont un côté est relié à l'unité d'extraction (130) et l'autre côté est ouvert,
dans lequel l'unité de capteur (140) est configurée pour détecter si un fluide est détecté dans la deuxième voie d'écoulement (F2) ou la troisième voie d'écoulement (F3),
dans lequel l'unité de commande (110) est configurée pour commander un fonctionnement de la deuxième soupape (152) afin de fermer la deuxième soupape (152) lorsqu'il est déterminé qu'un fluide est détecté de l'autre côté de la deuxième voie d'écoulement (F2),
l'unité de commande (110) est configurée pour commander le fonctionnement de la troisième soupape (153) afin de fermer la troisième soupape (153) lorsqu'il est déterminé qu'un fluide est détecté de l'autre côté de la troisième voie d'écoulement (F3),
dans lequel l'unité de commande (110) est configurée pour commander un fonctionnement de la première soupape (151) afin de fermer la première soupape (151) lorsque les deuxième et troisième soupapes (152, 153) sont fermées, et
**en ce que** la tête (131) comprend une ou plusieurs surfaces (131a) inclinées vers un côté de la troisième voie d'écoulement (F3) à partir d'une surface intérieure de la tête (131).

8. Dispositif d'extraction d'expresso selon la revendication 7, dans lequel l'unité de commande (110) est configurée pour commander une vitesse de l'unité de pression (120) afin de diminuer la pression dans l'unité d'extraction (130) lorsque la pression d'extraction est supérieure à la pression de référence,
dans lequel l'unité de commande (110) est configurée pour commander la vitesse de l'unité de pression (120) afin d'augmenter la pression dans l'unité d'extraction (130) lorsque la pression d'extraction est inférieure à la pression de référence, et
dans lequel l'unité de commande (110) est configurée pour commander une vitesse de l'unité de pression (120) afin de maintenir la pression dans l'unité d'extraction (130) lorsque la pression d'extraction est égale à la pression de référence.

9. Dispositif d'extraction d'expresso selon la revendication 7, dans lequel l'unité de capteur (140) comprend :
des capteurs de détection de fluide disposés de l'autre côté de la première voie d'écoulement (F1) et de l'autre côté de la deuxième voie d'écoulement (F2) et configurés pour détecter un fluide de l'autre côté de la première voie d'écoulement (F1) et de l'autre côté de la deuxième voie d'écoulement (F2) ; et
un capteur de pression (141) configuré pour mesurer la pression d'extraction de l'unité d'extraction (130).
